(19) Europäisches Patentamt

European Patent Office

Office européen des brevets

(11) EP 0 849 610 B1

# (12) FASCICULE DE BREVET EUROPEEN

(45) Date de publication et mention
de la délivrance du brevet:
**25.09.2002 Bulletin 2002/39**

(51) Int Cl.⁷: **G01V 1/22**

(21) Numéro de dépôt: **97403025.6**

(22) Date de dépôt: **12.12.1997**

(54) **Méthode de transmission de données sismiques compressées**

Komprimierten seismischen Daten Übertragungsverfahren

Transmission method for compressed seismic data

(84) Etats contractants désignés:
**DE FR GB NL**

(30) Priorité: **19.12.1996 FR 9615823
27.10.1997 US 958038**

(43) Date de publication de la demande:
**24.06.1998 Bulletin 1998/26**

(73) Titulaire: **INSTITUT FRANCAIS DU PETROLE
92852 Rueil-Malmaison Cedex (FR)**

(72) Inventeurs:
• **Grouffal, Christian
92500 Rueil-Malmaison (FR)**
• **Van Bui-Tran
91300 Massy (FR)**

(56) Documents cités:
FR-A- 2 692 384          US-A- 4 509 150
US-A- 4 815 044          US-A- 4 905 205

• LIANG ET AL.: "A translation-invariant wavelet
representation algorithm with applications"
IEEE TRANSACTIONS ON SIGNAL
PROCESSING, vol. 44, no. 2, février 1996, USA,
pages 225-232, XP002042114
• GALLI ET AL.: "Exploring the power of wavelet
analysis" IEEE COMPUTER APPLICATIONS IN
POWER, vol. 9, no. 4, octobre 1996, USA, pages
37-41, XP002042115

**Description**

La présente invention concerne une méthode de transmission de données utilisant des techniques de compression en vue d'optimiser l'utilisation de voies de transmission disponibles.

La méthode selon l'invention trouve des applications notamment dans le domaine de la prospection sismique où il est nécessaire de transférer vers une station centrale telle qu'un camion-laboratoire, une masse souvent considérable de données. Des signaux sont captés par un très grand nombre de récepteurs tels que des géophones disposés couplés avec une formation géologique à étudier, en réponse à des ébranlements émis par une source sismique et renvoyés par les discontinuités du sous-sol. Les signaux captés sont collectés par des unités locales d'acquisition réparties parfois sur une distance de plusieurs kilomètres et destinées chacune à collecter les signaux reçus par un ou plusieurs récepteurs, à les numériser, à leur appliquer des traitements préalables plus ou moins complexes et les stocker dans une mémoire locale avant leur transmission en temps réel ou différé à une station de collecte par une voie de transmission telle qu'un câble, une fibre optique, un canal radio etc.

ETAT DE LA TECHNIQUE

Différents systèmes de transmission de données sismiques sont utilisés pour relier des unités locales d'acquisition à une station central soit directement, soit via des stations intermédiaires pourvues de fonctions plus ou moins complexes de concentration ou de contrôle des unités locales. Les liaisons peuvent être assurées au moyen de câbles, de liaisons radio, via un ou plusieurs relais éventuels, ou encore combiner les liaisons par câbles et par liaison radio comme indiqué par exemple dans les brevets FR 2 720 518, FR 2 696 839, 2.608.780, 2.599.533, 2.538.561, 2.511.772 ou 2.627.652 du demandeur.

Par le brevet FR-A-2 608 780 (US 4,905,205) du demandeur notamment, il est connu d'utiliser des boîtiers d'acquisition sismique dotés de deux voies de transmission, l'une à débit de transmission relativement élevé, l'autre à bande passante qui peut être relativement étroite selon la disponibilité locale des fréquences de transmission, plus facilement disponibles dans le cadre des réglementations d'émission radio-électriques en vigueur. Les données sismiques collectées au cours des cycles successifs sont stockées sur une mémoire de masse dans chacun des boîtiers et transférées par intermittence à une station centrale de commande et d'enregistrement. Pour permettre à l'opérateur dans la station centrale de vérifier que l'acquisition des données par chacun des boîtiers d'acquisition se déroule normalement, on procède à une transmission des données partielles ce qui s'accommode bien d'une voie de transmission à bande passante relativement étroite.

Par le brevet FR 2 599 533 (US 4,815,044) on connaît un système de transmission par radio entre un laboratoire central de commande et d'enregistrement et des boîtiers d'acquisition répartis où des unités de transmission relais sont utilisées pour communiquer avec des boîtiers inaccessibles directement. Les échanges d'ordres ou de données du laboratoire central avec les boîtiers accessibles directement sont gérés au moyen d'une liaison radio dans une première bande de fréquence d'une part, et avec les unités relais, au moyen d'une liaison radio dans une autre bande de fréquence. Les liaisons entre le laboratoire central et n'importe lequel des boîtiers, qu'elles soient directes ou indirectes sont gérées automatiquement. Une partie du temps d'interrogation de chaque boîtier est réservée pour la transmission de données de service indicatives de leur bon fonctionnement.

Par le brevet FR-A-2 692 384 (US 5,550,787) du demandeur également, il est connu d'utiliser des boîtiers d'acquisition sismique pourvus notamment de moyens de traitement spécialisés dans le traitement des signaux auxquels on fait réaliser de nombreux contrôles des géophones et éléments de la chaîne d'acquisition ainsi que des prétraitements des traces sismiques auparavant réalisés à la station centrale après transmission, permettant donc de diminuer considérablement le volume de données à rapatrier.

La tendance actuelle, notamment dans le cadre des méthodes d'exploration sismique dites 3D, est à répartir sur une zone à explorer, à terre, en mer, ou dans des zones côtières, souvent sur plusieurs kilomètres, des récepteurs sismiques par centaines, voire par milliers. Le volume des données à collecter et à transmettre ne cesse de croître. Pour éviter que les problèmes de transmission ne constituent un frein à l'évolution des systèmes sismiques la tendance est de recourir à des procédés de compression de données choisis pour être compatibles avec les exigences propres des géophysiciens.

La compression des données sismiques peut apporter à la fois un gain de place appréciable sur les modules de stockage de masse dans les boîtiers locaux d'acquisition et/ou les stations locales de contrôle et de concentration, et aussi un gain considérable en temps de transmission.

De nombreuses méthodes existent pour compresser des données. On peut ranger en deux grandes classes selon qu'elles entraînent ou non une perte d'information, que l'on choisit suivant que l'on peut ou non tolérer une altération des données après leur décompression.

En géophysique notamment, il est indispensable que les pertes dues à la compression restent le plus faible possible car les informations les plus pertinentes sont souvent de très faible amplitude et ne peuvent être isolées du bruit de fond que par un traitement numérique effectué sur plusieurs traces. Des pertes éventuelles de précision ne sont tolérables que dans certains cas bien particuliers, si l'information transmise ne doit servir qu'à contrôler le bon fonctionnement du matériel et à visualiser "l'allure" des traces échantillonnées.

Les méthodes connues de compression de données peuvent être classées en deux familles, a) les méthodes de compression sans perte d'information et b) les méthodes conduisant à une perte d'information. les données restituées perdant une part plus ou moins grande de leur précision.

a) Parmi les méthodes de la première famille, on peut citer les méthodes qui visent à éliminer la redondance des données ou les méthodes dites à dictionnaire où chaque mot est remplacé par son index dans une table de référence, qui sont d'autant plus intéressantes que les fichiers à compresser contiennent beaucoup de redondance. Une méthode également connue dite RLE pour " Run-Length Encoding" est bien adaptée aux fichiers contenant d'importantes séquences de valeurs identiques.

On connaît aussi les méthodes de codage de type statistique où l'on cherche à remplacer les données par un code ayant la même signification mais occupant moins de place. La méthode de codage dite de Huffman par exemple consiste à associer à une donnée un code de longueur variable en fonction de sa fréquence d'occurrence. Les méthodes de type à codage arithmétique visent à représenter un nombre variable de données par un nombre constant de bits.

Une technique connue de compression dite LPC pour « Linear Predictive Coding » est bien adaptée à la compression des ondes acoustiques ou sismiques. Elle consiste essentiellement à remplacer un échantillon de signal s(t) par une prédiction faite à partir de p échantillons précédents, en supposant que le signal est stationnaire.

Au lieu de transmettre l'échantillon s(t), on transmet sa-prédiction $\mathbf{s}^{\wedge}$(t) c'est-à-dire les coefficients de prédiction et les résidus e(t) c'est-à-dire l'écart entre la valeur réelle et la prédiction qui en est faite au temps t, ce qui permet de retrouver à la décompression la valeur $\mathbf{s}$(t) = $\mathbf{s}^{\wedge}$(t) + $\mathbf{e}$(t) ). Si la prédiction est bonne, les résidus sont faibles et occupent une place moindre que celle des valeurs initiales s(t). Le nombre de coefficients servant à calculer s^(t) est en général faible et ils occupent peu de place par rapport à s(t). Il en est de même de e(+) qui, en général, est de plus faible amplitude que Δ(t).

Des applications de cette technique de codage sont décrits dans le brevet US 4,218,767 ou dans le document suivant : LIANG ET AL. : "A translation-invariant wavelet representation algorithm with applications" IEEE Trasactions on Signal Processing, vol. 44 n° 2 Feb. 1996, USA page 225-232.

Dans la famille des méthodes de compression avec pertes où l'objectif est de modéliser au mieux un signal avec un nombre de bits plus faible, on peut citer par exemple la méthode par quantification où l'on représente une information sur n bits par une autre codée seulement sur p (p<n) bits, puis, lors de la décompression à étendre ces p bits sur n bits par décalages, qui provoque des pertes très importantes.

Suivant d'autres méthodes telles la "transformée en cosinus discrète" ou DCT (Discrète cosine transform), utilisée très couramment utilisée pour la compression d'images, on découpe le signal en blocs de taille fixe, puis on modélise chacun d'eux par un ensemble de coefficients qui ne représentent pas l'amplitude du signal dans le temps mais plutôt son spectre fréquentiel. La compression apparaît en éliminant les coefficients de plus haute fréquence.

D'autres méthodes basées sur les transformées en ondelettes, sont également utilisées et on les trouve décrites par exemple par :

- Bosman, C. et al, *Seismic data compression using wavelet transforms*, 83th Annual meeting SEG,

- Vetterli, M.et al, *Wavelets and filter banks*, IEEE Transactions on signal processing, vol 40, N° 9, Septembre 1992 :

- Coifman, R. et al; *Best adapted wave packet bases*,, Numerical Algorithms Research Group, Yale University, ou

- Daubechies, I. *Ten Lectures on wavelets*, CBMS-NSF, 1993.

Un signal quelconque est représenté dans une base de fonctions qui sont les versions translatées (temporel) et dilatées (fréquence) d'une ondelette. La représentation du signal par les ondelettes, se traduit par un jeu de coefficients différents qui permettent d'exprimer le signal à partir d'une base de fonctions d'ondelettes. Transmettre le signal équivaut alors à transmettre ces coefficients et le compresser revient à l'exprimer par un jeu de coefficients réduit.

La méthode de transmission selon l'invention comporte l'utilisation de techniques de codage connues en elles-mêmes, choisies de façon à pouvoir intégrer souplement les phases de transmission de données dans le déroulement classique d'une campagne de prospection sismique aussi bien dans les zones purement terrestres, que dans les zones côtières où les données sismiques collectées par des appareils d'acquisition peuvent être le résultat d'ondes renvoyées par les discontinuités du sous-sol, provenant de sources sismiques remorquées en immersion par un navire, et par exemple de canons à eau ou à air.

Dans le premier cas. on utilise par exemple des charges explosives. A chaque fois, l'équipe sur le terrain en installe plusieurs, et les intervalles de temps entre les tirs successifs de ces différentes peuvent être relativement courts, réduits sensiblement à la fenêtre de réception utile, quelques dizaines de seconde en pratique. Entre chaque "salve", il s'écoule un temps plus long, nécessaire au positionnement d'un nouvel ensemble de charges par l'équipe de terrain.

Dans le deuxième cas, le navire remorqueur évolue en zigzag suivant des lignes parallèles alternativement dans un sens et dans le sens opposé. Une nouvelle série de cycles d'émission-réception-acquisition a lieu le long de chacune des trajectoires successives, à intervalles relativement courts dépendant du temps de réarmement de la source utilisée. Entre les séries successives de cycles, il s'écoule un temps relativement long nécessaire au navire pour virer de bord et se repositionner suivant une nouvelle trajectoire.

La méthode de transmission selon l'invention est adaptée à tirer au mieux parti de cette distribution irrégulière des temps forts de collecte de données sismiques, dans la pratique usuelle des campagnes d'exploration sismique, pour réaliser aussi bien des transmissions de contrôle destinées à vérifier le bon déroulement des opérations d'acquisition par chacun des appareils d'acquisition sur le terrain, que des rapatriements complets des données sismiques à une station centrale de commande, de façon à restituer sans perte toutes les traces sismiques transmises, en limitant au mieux les durées de transmission nécessaires à cet effet.

La méthode selon l'invention convient pour le transfert en deux temps de traces sismiques entre une ou plusieurs unités locales (A) d'acquisition de données sismiques, et une station distante (CS), par au moins une voie de transmission, comportant un enregistrement des traces sismiques dans chaque unité locale d'acquisition, une transmission dans un premier temps de données sismiques partielles permettant un contrôle de la qualité de fonctionnement des unités locales d'acquisition, et, dans un deuxième temps, une transmission à la station distante (CS) des traces sismiques enregistrées.

Elle est caractérisée en ce que les données sismiques transmises durant le premier temps sont des données compressées avec perte, les traces sismiques sont enregistrées localement avec une compression sans perte, la méthode comportant la détermination de la différence entre les traces sismiques compressées sans perte enregistrées dans chaque unité locale et les données sismiques correspondantes compressées transmises durant le premier temps, la transmission de cette différence durant le deuxième temps et la reconstitution à la station distante des traces sismiques collectées par chaque unité locale d'acquisition, par combinaison des données sismiques reçues successivement au cours des deux temps de transmission.

Suivant les cas, on peut utiliser soit une même technique de compression pour les données sismiques transmises dans le premier temps et les données sismiques transmises dans le deuxième temps, soit une technique différente pour les deux.

Les données sismiques compressées transmises durant le premier temps comportent par exemple au moins une partie significative d'une trace sismique acquise localement par chaque unité locale d'acquisition.

Suivant un mode de mise en oeuvre où les données sismiques sont collectées par des unités d'acquisition locales au cours de sessions d'acquisition de données comportant chacune une pluralité de cycles d'enregistrement de traces sismiques correspondant à des signaux sismiques renvoyés par des discontinuités du sous-sol, en réponse à des signaux sismiques transmis dans le sol par une source sismique, les différents cycles d'une même session étant séparés les uns des autres par des intervalles de temps déterminés, la première compression de chaque trace sismique est effectuée avec un premier taux de compression suffisant pour que le premier temps de transmission puisse être intercalé durant un de ces intervalles de temps par une voie de transmission disponible, l'enregistrement local de chaque trace sismique dans une unité locale d'acquisition est effectué après application aux données sismiques d'une compression sans perte avec un deuxième taux de compression, le deuxième temps de transmission différé ayant lieu durant un intervalle de temps entre les dites sessions.

On utilise par exemple une deuxième voie de transmission (câble, fibre optique, canal radio, mémoire de masse déplacée sur le terrain jusqu'au voisinage des unités d'acquisition, etc) pour le transfert des données sismiques transmises durant le deuxième temps.

Pour obtenir des données sismiques compressées, on leur applique une technique de transformation par ondelettes ou de prédiction statistique.

Le système selon l'invention permet le transfert en deux temps de traces sismiques entre une ou plusieurs unités locales (A) d'acquisition de traces sismiques, et une station distante, par au moins une voie de transmission, chaque unité locale d'acquisition comportant des moyens d'acquisition et d'enregistrement de traces sismiques, des moyens de transmission en deux temps des données sismiques avec transmission dans un premier temps, de données partielles permettant un contrôle de la qualité de fonctionnement des unités locales d'acquisition, et, dans un deuxième temps, une transmission à la station distante des traces sismiques enregistrées, et un ensemble de contrôle et de compression de données.

Il est caractérisé en ce que chaque ensemble de contrôle et de compression comporte des moyens pour appliquer une compression avec perte aux données sismiques transmises durant le premier temps, le taux de compression étant adapté à la durée d'une fenêtre de transmission ainsi qu'au débit de la voie de transmission utilisée, des moyens pour appliquer une compression sans perte aux données sismiques enregistrées localement, des moyens pour calculer la différence entre les traces sismiques compressées enregistrées dans chaque unité locale et les données sismiques correspondantes compressées transmises durant le premier temps, les moyens de transmission étant adaptés à transmettre cette différence durant le deuxième temps; le système comportant, dans la station distante, un ensemble de traitement pour reconstituer les traces sismiques collectées par chaque unité locale de d'acquisition, par combinaison des données sismiques reçues successivement au cours des deux temps de transmission.

L'ensemble de contrôle et de compression dans chaque unité locale d'acquisition, est adapté par exemple à appliquer aux données sismiques une deuxième compression de type sans perte avec un deuxième taux de compression.

Chaque unité locale d'acquisition comporte par exemple un ordinateur pourvu d'un processeur de signaux et programmé pour effectuer la compression des traces sismiques.

D'autres caractéristiques et avantages de la méthode selon l'invention, apparaîtront à la lecture de la description ci-après d'un exemple non limitatif de réalisation, en se référant aux dessins annexés où :

- la Fig.1 montre schématiquement un dispositif d'acquisition et de transmission de données sismiques ;

- la Fig.2 montre schématiquement sous forme de blocs fonctionnels, la structure interne d'une unité locale d'acquisition ;

- la Fig.3 illustre la technique connue de prédiction statistique de la valeur d'échantillons d'un signal ;

- la Fig.4 schématise les opérations de compression d'un signal ;

- la Fig.5 schématise les opérations de décompression symétrique d'un signal ;

- la Fig.6 montre différentes ondelettes permettant d'analyser un signal à comprimer ;

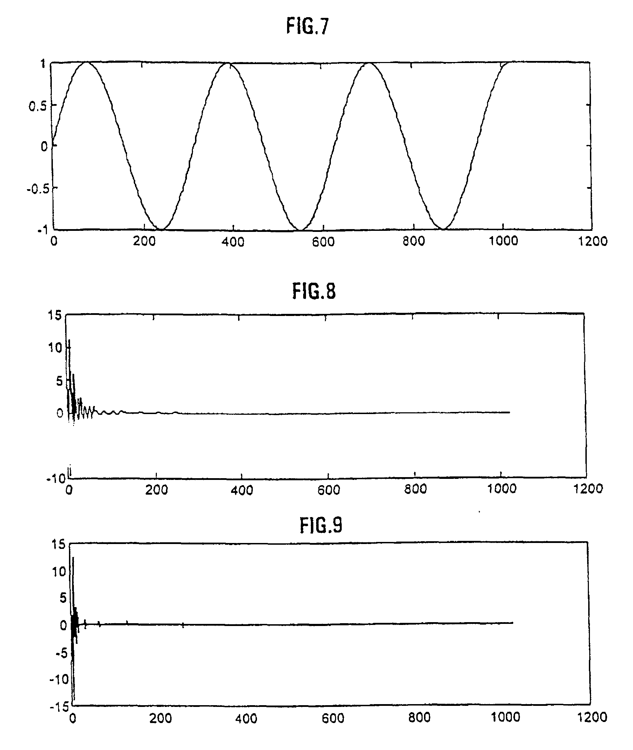

- les Fig.7, 8, 9 montrent respectivement un signal sinusoïdal et ses transformées par ondelette de Haar et ondelette D20

- la Fig.10 montre différentes fonctions d'ondelette et d'échelle bien adaptées à la compression de signaux sismiques;

- la Fig.11 montre un histogramme d'erreur quadratique moyenne (RMS) obtenu par exemple avec une ondelette S20 pour un signal sismique impulsionnel: et

- la Fig.12 montre un histogramme analogue pour un signal sismique vibratoire.

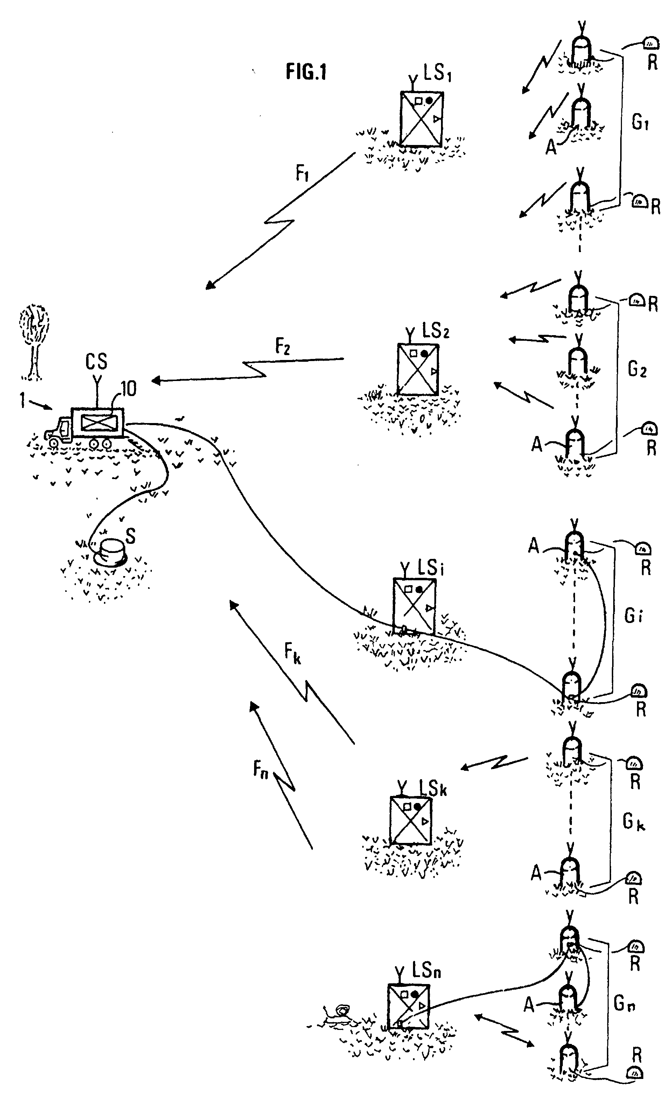

Le dispositif sismique schématisé à la Fig. 1 comporte un ensemble souvent considérable (de plusieurs centaines à plusieurs milliers) de récepteurs sismiques R répartis à intervalles les uns des autres sur une zone à explorer, suivant une disposition convenant pour le type de prospection 2D ou 3D à effectuer, ces récepteurs captant les ondes sismiques renvoyées par des discontinuités souterraines. en réponse à la transmission dans le sol d'ondes sismiques produites par une source S, et une station centrale de commande et d'enregistrement 1 où tous les signaux sismiques collectés sont finalement centralisé par le moyen du système de transmission qui va être décrit. Chacun de ces récepteurs R est constitué le plus souvent d'une bretelle de capteurs élémentaires alignés qui produisent chacun une "trace sismique".

Le dispositif comporte un ensemble d'unités locales A de collecte des données sismiques, chacune adaptée à acquérir au moins une trace sismique.

L'ensemble des unités de collecte A communique avec une station centrale CS soit directement (par radio ou par câble), soit par l'intermédiaire de stations intermédiaires LS avec des fonctions plus ou moins complexes. Il peut s'agir de concentrateurs destinés à organise et séquencer les échanges entre les unités locales RTU et la station centrale comme décrit par exemple dans le brevet EP-A-594 477 du demandeur. Outre ces fonctions de concentration, chaque station intermédiaire LS peut être dotée de fonctions de commande et contrôle de tâches diverses exécutées par les unités locales RTU, sous le contrôle de la station centrale comme décrit dans le brevet FR-A-2 720 518. Chacune de ces stations intermédiaires LS contrôle par exemple un nombre p d'unités locales de collecte A. Elles communiquent avec les unités de leurs groupes respectifs par une liaison radio ou éventuellement par une ligne de transmission 1.

Les unités intermédiaires communiquent avec la station centrale SC par des canaux hertziens F1, F2, ..., Fn. La collecte des données sismiques mémorisées dans les différentes unités d'acquisition peut encore s'effectuer par transfert direct sur une mémoire de masse déplacée sur le terrain successivement jusqu'au voisinage de chacune d'elles.

Le dispositif comporte une source sismique S. Selon les cas, il s'agit d'une source impulsionnelle telle qu'une charge explosive par exemple produisant une trace sismique, ou d'un vibrateur. Cette source peut être couplée avec les terrains de la zone à explorer et reliée par radio ou câble de commande avec la station centrale ou bien dans le cas d'une exploration de zones côtières. éventuellement remorquée en immersion par un bateau boute-feu, relié par radio avec la station centrale.

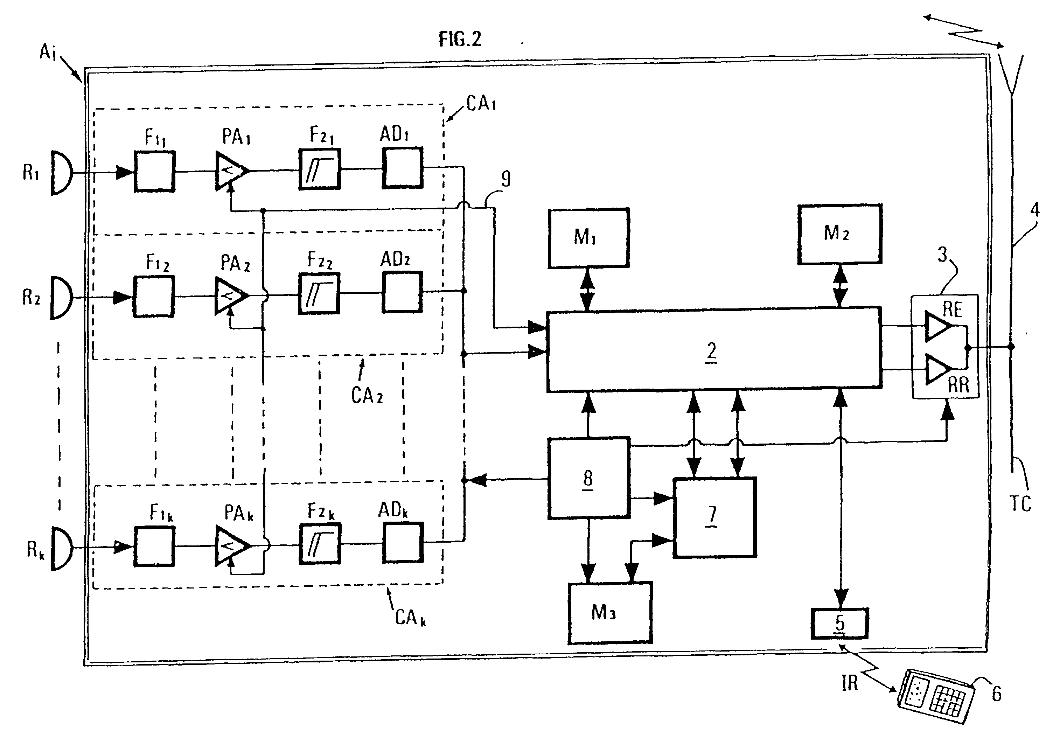

Chaque appareil d'acquisition Ai (Fig.2) est adapté à collecter par exemple k traces captés par un certain nombre k de récepteurs sismiques $R_1$, $R_2$, $R_k$. A cet effet, il comporte par exemple ($k \geq 1$) chaînes d'acquisition $CA_1$ à $CA_k$ recevant respectivement les k signaux et comportant chacune un filtre passe-bas $F_{11}$, $F_{12}$, ... Fk un pré-amplificateur $PA_1$, $PA_2$,... $PA_k$, un filtre passe-haut $F_{21}$, $F_{22}$, ... $F2_k$ et un convertisseur analogique-numérique (ADC) $C_1$, $C_2$, ..., $C_k$ pour convertir les signaux analogiques amplifiés et filtrés en mots numériques. Toutes les chaînes sont connectées à un microprocesseur 2 traitant les mots numériques de 16 à 32 bits par exemple, programmé pour gérer l'acquisition et les échanges avec la station centrale 1. Au microprocesseur 2 sont associés deux blocs de mémoire $M_1$ et $M_2$ et une mémoire Mp pour les programmes. Le processeur 2 est connecté à une unité 3 d'émission-réception par radio ou par ligne, adaptée à la voie de transmission employée pour la communication avec la station centrale CS ou la station intermédiaire correspondante LS. S'il s'agit d'une voie hertzienne, l'unité 3 comporte un radio-émetteur RE et un radio-récepteur RR qui communique avec une antenne 4. Une unité d'interface 5 décrite dans le brevet FR-A-2.608.780 précité, permet en outre une communication par rayons infra-rouges avec un boîtier d'initialisation 6 à l'aide duquel un opérateur peut éventuellement communiquer au processeur de gestion 2, des instructions d'adressage et de sélection des paramètres de fonctionnement des chaînes d'acquisition.

Le système selon l'invention de préférence, comporte dans chaque appareil d'acquisition $A_i$, un processeur 7 spécialisé dans le traitenient des signaux. Il peut s'agir par exemple d'un processeur à 32 bits à virgule flottante du type DSP 96002 par exemple, qui est associé à un dispositif du type DMA pour accélérer les transferts par blocs de données entre les deux processeurs 2 et 7. A ce dernier, est adjoint une mémoire de travail Mp. Chaque appareil d'acquisition comporte aussi une alimentation électrique autonome 8.

Le processeur 2 agit en maître. Il a pour fonctions de réaliser le décodage des ordres transmis par la station centrale 1, et de gérer :

- l'acquisition des signaux des récepteurs $R_1$ à $R_k$ par les différentes chaînes d'acquisition,

- les transmissions en relation avec l'unité 3;

- les mémoires $M_1$ et $M_2$ pour le stockage temporaire des données;

- les entrées-sorties;

- les interruptions entre programmes;

- les échanges avec le processeur de calcul DSP 7 etc.

De par sa structure propre, le processeur de calcul DSP 7 est particulièrement adapté à effectuer à grande vitesse des opérations telles que des conversions de format, des multiplications de nombres complexes, des transformations de Fourier du type FFT, des corrélations entre les signaux reçus et les signaux émis, des filtrages numériques, des sommations de tirs successifs avec élimination des bruits perturbateurs de nature non sismique, des combinaisons entre eux des signaux délivrés par des récepteurs sismiques multi-axes tels que des géophones tri-axiaux par exemple, etc. Les pré-traitements accomplis localement avant transmission contribuent à réduire sensiblement le nombre de tâches dévolues à la station centrale 1 et donc la puissance de calcul installée qui devient considérable quand le nombre de traces sismiques à acquérir en temps réel est de plusieurs centaines voire même dépasse mille.

Comme on va le décrire ci-après, le processeur 7 de chaque unité de collecte A est également programmé pour appliquer aux traces collectées. un ou plusieurs algorithmes de compression de données de façon à réduire le volume de données à et à profiter au mieux des intervalles de temps plus ou moins longs intercalés entre les cycles d'émission-réception ou « tirs » d'une même série de cycles ou entre les séries de « tirs » successifs.

A chacun des cycles successifs d'émission-réception. une trace sismique est numérisée et enregistrée dans une mémoire de chaque unité de collecte Ai.

**Compression sans perte**

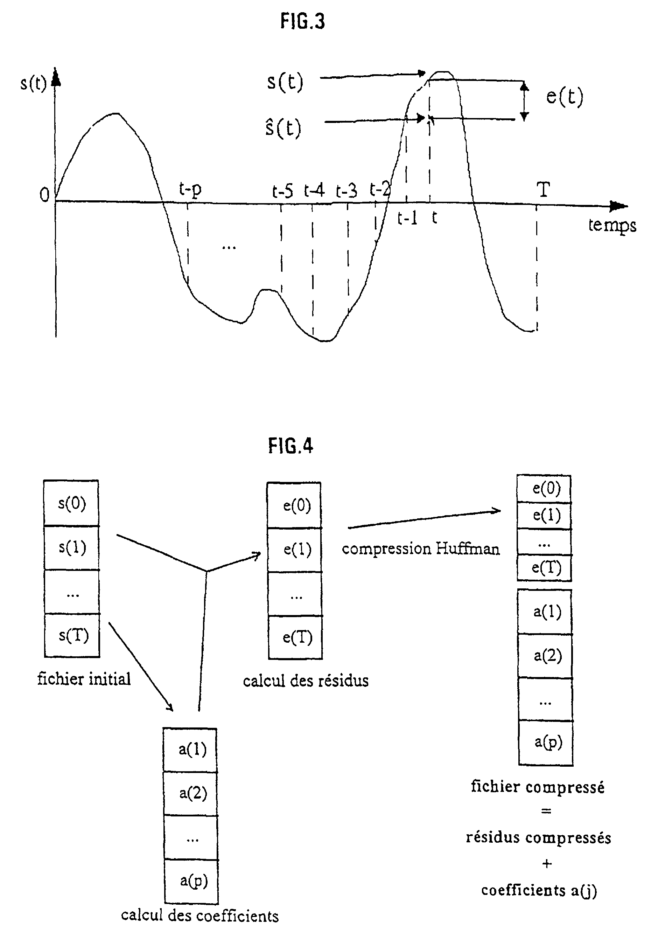

De préférence, on applique à la trace une compression de type sans perte. Il peut s'agir par exemple de la technique prédictive dite LPC précédemment évoquée, où l'amplitude s(t) d'un échantillon de signal à un instant t (Fig. 3) est .calculée par une prédiction faite à partir d'un certain nombre p échantillons aux temps (t-1), (t-2). (t-3), ... (t-p).

La valeur prédite est calculée en accord avec la relation :

$$s^\wedge(t) = \sum_{j=1}^{p} a_j . s(t-j) \qquad (1)$$

Au lieu de transmettre l'échantillon, on transmet sa prédiction s^(t) c'est-à-dire les coefficients de prédiction et les résidus e(t) c'est-à-dire l'écart que l'on calcule entre la valeur réelle s(t) et la prédiction s^(t) qui en est faite au temps t, ce qui permet de retrouver la valeur s(t) = s^(t) + e(t) ) (Fig.4). Si la prédiction est bonne, les résidus sont faibles et occupent une place moindre que celle des valeurs initiales s(t).

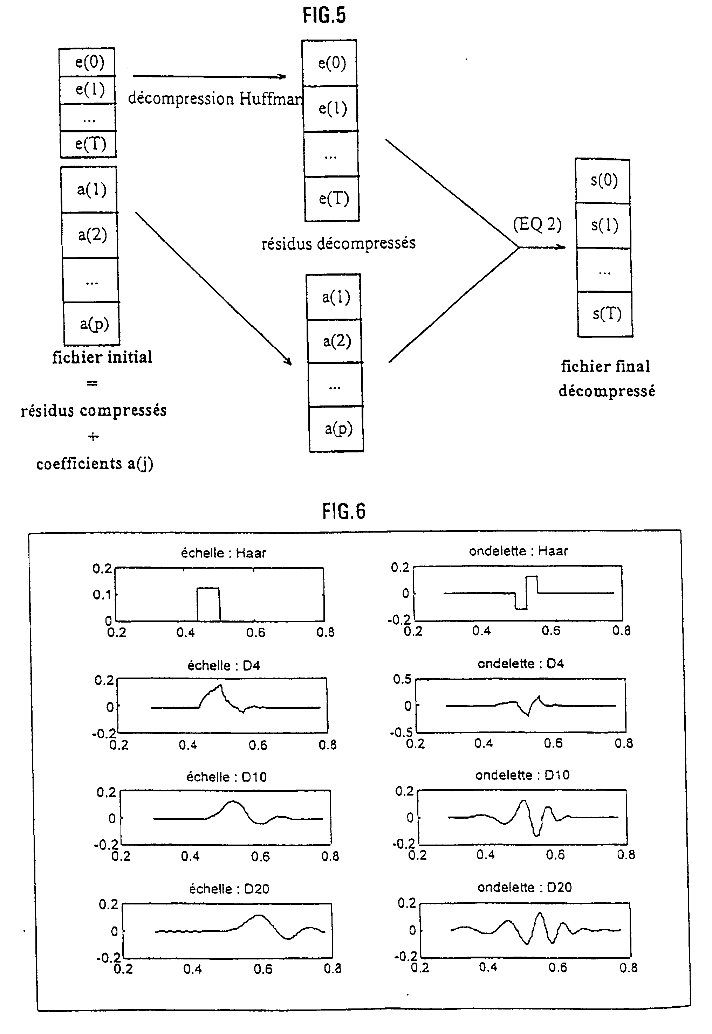

A l'étape de décompression, (Fig.5), le signal est restitué selon la formule suivante :

$$s(t) = \sum_{j=1}^{p} a_j . s(t-j) + e(t) \quad ; \text{avec } t \in [0,T] \qquad (2)$$

Au temps t, les valeurs de s aux temps inférieurs ont déjà été calculées, on connait de ce fait s(t-j) pour $j \in$ [1, p]. Les valeurs s(t-j) de l'équation (2) qui ne sont pas connues pour $t \in$ [0, p-1] ] sont remplacées par la valeur 0. Pour prédire la valeur d'un échantillon, on sélectionne le polynome d'interpolation appliqué à une ou plusieurs valeurs d'échantillons précédents pour minimiser les résidus, comme il est connu.

**Compression avec perte**

La méthode selon l'invention comporte l'application à chaque trace d'un taux de compression relativement important choisi de façon que cette trace comprimée puisse être transmise sur une voie de transmission relativement étroite et dans une fenêtre de transmission imposée par le déroulement des sessions d'émission-réception. La durée d'un cycle d'acquisition est de l'ordre de quelques secondes (6s par exemple), supérieure le plus souvent à l'intervalle de temps séparant deux cycles successifs. On choisit donc un type de compression et un taux permettant de transmettre par exemple l'ensemble de la trace dans cette fenêtre imposée ou au moins une partie significative de celle-ci.

Il en résulte généralement une perte d'information qui est tolérable ici car les données transmises servent à des fins de contrôle. L'examen de la trace même légèrement déformée par la compression, suffit à un opérateur dans la station CS (Fig. 1) pour vérifier que la trace a bien été enregistrée.

Cette première transmission avec pertes à des fins de contrôle est utilisée dans la méthode selon l'invention pour reconstituer à la station chacune des traces telle qu'elle a été enregistrée après compression sans perte dans les mémoires M1, M2 (Fig.2) de chaque unité de collecte A. Plutôt que de transmettre sans perte la masse considérable de données correspondant à toutes les traces mémorisées au cours d'une même série ou d'une session quotidienne, on calcule dans chaque unité de collecte la différence entre d'une part la trace compressée sans perte (ou éventuellement la trace réelle non compressée), et d'autre part la trace compressée qui a été auparavant transmise à des fins de contrôle. Pour reconstituer chaque trace à la station centrale, on transmet dans un deuxième temps seulement cette différence. Cette procédure de transfert en deux temps réduit globalement et de façon considérable, le temps qui autrement serait nécessaire pour rapatrier les traces complètes.

Comme technique de compression, on peut choisir aussi par exemple celle basée sur la transformée en ondelettes.

Comme on l'a vu, l'analyse par ondelettes consiste à décomposer un signal quelconque sur une base de fonctions particulières d'un sous-espace ayant des propriétés bien déterminées. Une ondelette f ou y est une fonction dont les versions translatées (temporel) et dilatées (fréquence) forment une base de ce sous-espace. L'objectif désiré est de modéliser un signal en cherchant où peuvent être localisées (clans le temps) les irrégularités du signal ( par exemple des variations brusques ou hautes fréquences).

On appelle f la fonction "d'échelle" qui permet d'avoir une version filtrée passe-bas du signal original, et y la fonction "ondelette" permettant d'avoir les détails (filtre passe-haut) entre deux versions consécutives filtrées par f.

Dès lors, la réunion de ces informations nous permet de reconstituer le signal original suivant certaines conditions. On nomme "filtres d'analyse", les filtres permettant la transformée avant par ondelettes et "filtres de synthèse" ceux utilisés pour la transformée inverse. Différentes familles d'ondelettes connues existent. On peut utiliser par exemple une famille de filtres appelés "filtres en miroirs quadrature" (QMF) qui autorisent un filtre d'analyse identique à celui de synthèse à une inversion près de l'ordre des coefficients.

Par cette transformée en ondelettes, on obtient une liste de coefficients, et la compression intervient en annulant les coefficients les plus faibles en amplitude, inférieurs à un seuil déterminé. Le nombre de coefficients à conserver intacts est au choix de l'utilisateur en sachant que plus leur nombre est élevé, meilleure est l'approximation (la totalité des coefficients assure une reconstruction parfaite) lors de la transformée inverse. Il faut noter que l'ordre des coefficients est primordial pour la reconstruction et que donc même les coefficients nuls sont à préserver. Ces coefficients une fois quantifiés en nombres entiers sont bien adaptés à une compression du type RLE déjà citée.

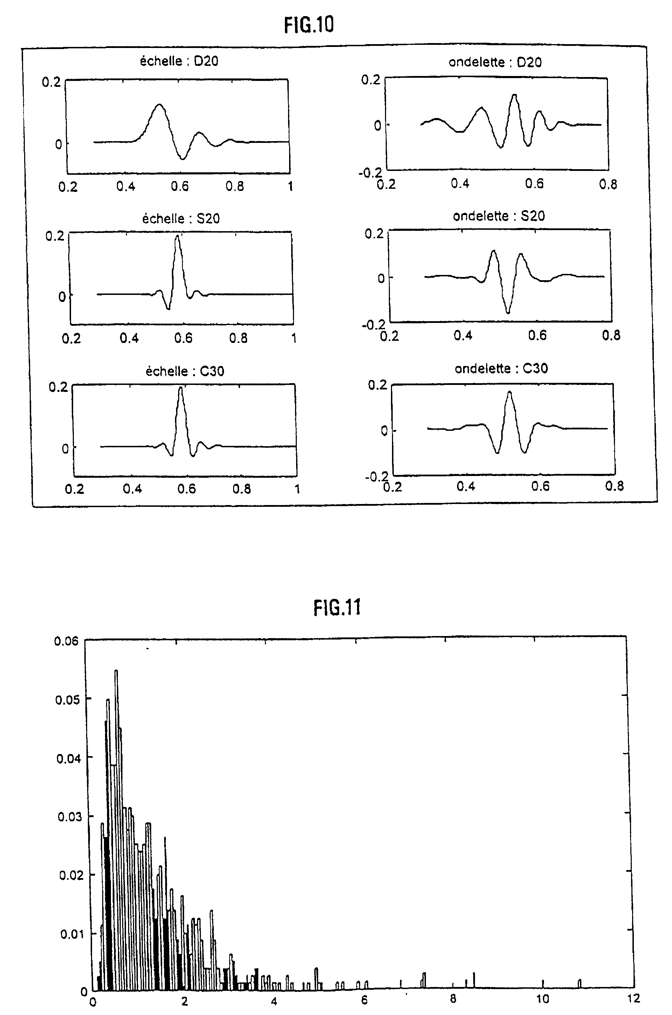

On choisit de préférence une ondelette bien adaptée au filtrage de certaines fréquences du signal. Finalement, pour ce type de transformation, on peut choisir (Fig.10) l'ondelette qui aura la capacité à concentrer un maximum d'énergie du signal dans les basses-fréquences et qui sera la meilleure d'un point de vue compression.

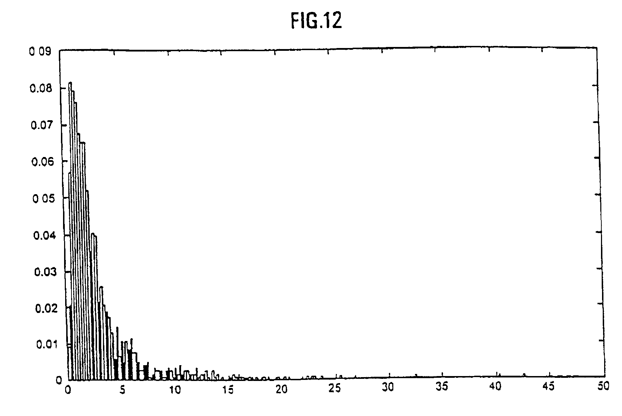

Pour évaluer la qualité de la reconstruction on détermine (Fig.11, 12), l'erreur quadratique moyenne) dont le taux RMS qui mesure l'erreur de reconstruction au sens de l'énergie du signal, est défini comme suit :

$$RMS = \sum_t \frac{(x_t - \tilde{x}_t)^2}{x_t^2} * 100$$

avec $x_t$, un échantillon du signal original, et $\tilde{x}_t$, un échantillon du signal reconstruit.

Une méthode connue facilitant la sélection de la famille d'ondelettes la mieux adaptée à la nature des signaux sismiques à traiter, est la méthode de transformation par paquets d'ondelettes avec constitution d'une "librairie" de bases d'ondelettes, attribution d'une note à chaque base à l'aide d'une fonction de coût, telle que le logarithme de l'énergie ou l'entropie, note qui mesure l'importance de l'information contenue dans cette base; puis sélection des bases les mieux notées, permettant la meilleure reconstitution du signal. La compression s'effectue également en annulant les coefficients les plus faibles.

On peut utiliser par exemple une fonction de coût d'un type connu définie par:

$$\lambda = -\sum_l x_l^2 . \log(x_l^2)$$

Avec : $x_j$, l'ensemble des "j" coefficients d'une base donnée et $\lambda$, le coût de cette base.

Le nombre de coefficients nécessaire à la reconstruction du signal, détermine le taux de compression appliqué. En l'occurrence, ce taux est imposé par le cadencement fixé des cycles d'émission-réception sismique qui délimite les fenêtres de transmission des traces compressées transmises à des fins contrôle. On n'envoie ainsi dans un premier temps que la partie la plus significative des coefficients d'ondelettes.

Dans un deuxième temps, on met à profit les intervalles de temps d'interruption inhérents à la technique de prospection utilisée, pour transmettre la différence entre la trace sismique complète et la partie déjà transmise à des fins de contrôle, en l'occurrence les résidus i.e. la série complète des coefficients de la transformation.

Voici, à titre d'exemples, les taux d'erreur quadratique moyenne (RMS) obtenus en fonction du nombre de coefficients :

En prospection sismique avec source impulsionnelle :

| Nombre de coefficients | Taux de compression | RMS |
|---|---|---|
| 100 | 97% | 1,36% |
| 500 | 91% | 14e-3% |

En prospection sismique avec vibrateur :

| Nombre de coefficients | Taux de compression | RMS |
|---|---|---|
| 100 | 83% | 3,18% |
| 500 | 57% | 28e-2% |

Pour 100 coefficients d'ondelettes significatifs $T_S = 97\%$, $T_V = 91\%$ ), on obtient les taux RMS moyens suivants par WPT sur l'ensemble des traces ;

| | D20 | C30 | S20 |
|---|---|---|---|
| Explosif | 1,53 % | 1,38% | 1,36% |
| Vibratoire | 3,33% | 3,24% | 3,18% |

On vérifie que les ondelettes à tendance symétriques (C30 et S20), sont les mieux adaptées

Il s'avère que la sismique vibratoire en pratique est plus difficile à reconstruire que la sismique impulsionnelle. Voici par exemple à à titre de comparaison, la même opération avec 500 coefficients ($T_S = 83\%$, $T_V = 57\%$ ):

| | D20 | C30 | S20 |
|---|---|---|---|
| Explosif | 16e-3 % | 14e-3% | 14e-3% |
| Vibratoire | 29e-2% | 28e-2% | 28e-2% |

Les erreurs deviennent négligeables pour un taux de compression très intéressant, surtout en explosif.

**Modes de mise en oeuvre**

Différentes possibilités peuvent être utilisées pour réaliser cette transmission en deux temps.

1) On peut combiner deux modes de compression différents, l'un pour compresser avec perte les données devant être transmises dans un premier temps à des fins de contrôle de qualité, l'autre pour compresser les données enregistrées dans chaque appareil d'acquisition en vue de leur transmission différée dans un deuxième temps. Dans ce cas, les données servant au contrôle qualité peuvent ne servir qu'à cela, la transmission effectuée dans le deuxième temps portant sur la totalité des traces compressées.

2) On peut encore utiliser un seul mode de compression pour compresser les données et leur appliquer deux taux de compression, le premier étant sans perte pour l'enregistrement local des données, le deuxième impliquant des pertes, étant appliqué aux données (l'ensemble de chaque trace par exemple) destinées à être transmises durant le premier temps pour les besoins du contrôle de qualité.

a) Dans le cas où l'on utilise une transformation par ondelettes permettant de traduire les données par une série de coefficients de valeurs décroissantes, on peut choisir le taux de compression appliqué en sélectionnant le nombre limité de coefficients que l'on transmet pour le contrôle de qualité, compatible avec la fenêtre de temps dont on dispose pour leur transmission entre deux « tirs ». Ce nombre est fixé en ne sélectionnant que les coefficients au-dessus d'une certaine valeur-seuil. Le choix peut être imposé par l'opérateur ou éventuellement laissé au système de traitement local. Dans le deuxième temps, on transmet l'intégralité de tous les coefficients de la compression si l'on veut reconstituer exactement chaque trace.

b) Dans le cas où l'on utilise la technique de codage de type LPC par exemple. on stocke dans les mémoires de chaque unité de collecte A. les résidus traduisant les écarts entre les données complètes compressées sans perte et celles transmises avec perte dans le premier temps, lesquels résidus sont transmis dans un deuxième temps à la station centrale pour la reconstitution des signaux.

Si l'on utilise la technique de codage de type LPC, qui implique, on l'a vu, la transmission de coefficients de prédiction et des erreurs de prédiction e(t), la méthode va consister à ne transmettre dans un premier temps qu'une partie seulement de ces erreurs. On ne retient pour cette transmision en l'occurrence que les bits de poids le plus fort des mots codant ces erreurs. Les données reçues par l'opérateur sont dégradées mais suffisantes pour que l'opérateur puisse faire un contrôle de qualité.
Dans le deuxième temps de la transmission, il suffit alors de transmettre les résidus non encore transmis des erreurs tronquées dans le premier temps pour être en mesure à la station de réception CS de reconstituer sans perte l'intégralité des données sismiques.

3) Suivant un autre mode de réalisation convenant si l'on peut tolérer une certaine dégradation des signaux sismiques, on choisit des taux de compression $\tau_1$, $\tau_2$ différents pour les données sismiques selon qu'elles sont transmises dans le premier temps et dans le deuxième temps. Avec la méthode de compression par ondelettes, on transmet dans le premier temps un nombre restreint de coefficients de la transformée compatible avec la fenêtre de temps dont on dispose pour leur transmission entre deux "tirs". en ne sélectionnant par exemple que les coefficients supérieurs à une certaine valeur-seuil, et, dans le deuxième temps, un nombre plus grand mais inférieur au nombre total, dépendant de la qualité attendue des signaux à la réception.

D'autres variantes sont possibles sans sortir du cadre de l'invention si elles sont compatibles avec le principe de la transmission en deux temps des données sismiques avec dans un premier temps une transmission de données compressées permettant un contrôle de la qualité de fonctionnement des unités locales et dans un deuxième temps une transmission de données permettant un enregistrement sans perte des données sismiques à la station distante.

On a décrit un mode d'implémentation de la méthode au moyen d'un ensemble de traitement dans chaque appareil d'acquisition comportant un processeur de signal de type DSP. Il est bien évident cependant que l'on peut utiliser à cet effet d'une façon plus générale tout dispositif de calcul adapté à effectuer toutes les opérations de compression requises.

**Revendications**

1.  Méthode pour le transfert en deux temps de traces sismiques entre une ou plusieurs unités locales (A) d'acquisition de données sismiques, et une station distante (CS), par au moins une voie de transmission, comportant un enregistrement des traces sismiques dans chaque unité locale d'acquisition, une transmission dans un premier temps de données sismiques partielles pour permettre un contrôle de la qualité de fonctionnement des unités locales d'acquisition, et, dans un deuxième temps, une transmission à la station distante (CS) des traces sismiques enregistrées, **caractérisée en ce que** les données sismiques transmises durant le premier temps sont des données compressées avec perte, les traces sismiques sont enregistrées localement avec une compression sans perte, la méthode comportant la détermination de la différence entre les traces sismiques compressées sans perte enregistrées dans chaque unité locale (A) et les données sismiques correspondantes compressées transmises durant le premier temps, la transmission de cette différence durant le deuxième temps et la reconstitution à la station distante (CS) des traces sismiques collectées par chaque unité locale d'acquisition (A), par combinaison des données sismiques reçues successivement au cours des deux temps de transmission.

2. Méthode selon la revendication 1, **caractérisée en ce que** les données sismiques compressées transmises durant le premier temps comportent au moins une partie d'une trace sismique acquise localement par chaque unité locale d'acquisition (A).

3. Méthode selon l'une des revendications 1 ou 2, **caractérisée en ce que** les données sismiques étant collectées par des unités d'acquisition locales (A) au cours de sessions d'acquisition de données comportant chacune une pluralité de cycles d'enregistrement de traces sismiques correspondant à des signaux sismiques renvoyés par des discontinuités du sous-sol, en réponse à des signaux sismiques transmis dans le sol par une source sismique (S), les différents cycles d'une même session étant séparés les uns des autres par des intervalles de temps déterminés, la première compression de chaque trace sismique est effectuée avec un premier taux de compression suffisant pour que le premier temps de transmission puisse être intercalé durant un des dits intervalles de temps par une voie de transmission disponible, l'enregistrement local de chaque trace sismique dans une unité locale d'acquisition (A) est effectué après application aux données sismiques d'une compression sans perte avec un deuxième taux de compression, le deuxième temps de transmission différé ayant lieu durant un intervalle de temps entre les dites sessions.

4. Méthode selon l'une des revendications précédentes, **caractérisée en ce que** l'on utilise une deuxième voie de transmission pour le transfert des données sismiques transmises durant le deuxième temps.

5. Méthode selon l'une des revendications précédentes, **caractérisée en ce que** l'on applique aux données sismiques une technique de transformation par ondelettes pour obtenir des données sismiques compressées.

6. Méthode selon l'une des revendications 1 à 5, **caractérisée en ce que** l'on applique aux données une technique de prédiction statistique pour obtenir des données sismiques compressées.

7. Système pour le transfert en deux temps de traces sismiques entre une ou plusieurs unités locales (A) d'acquisition de traces sismiques, et une station distante (CS), par au moins une voie de transmission, dans lequel chaque unité locale d'acquisition comporte des moyens (CA, M) d'acquisition et d'enregistrement de traces sismiques, des moyens (3, 4) de transmission en deux temps des données sismiques avec transmission dans un premier temps, de données partielles pour permettre un contrôle de la qualité de fonctionnement des unités locales d'acquisition, et, dans un deuxième temps, une transmission à la station distante (CS) des traces sismiques enregistrées, et un ensemble de contrôle et de compression de données (2, 7), **caractérisé en ce que** chaque ensemble de contrôle et de compression (2,7) comporte des moyens pour appliquer une compression avec perte aux données sismiques à être transmises durant le premier temps, le taux de compression étant adapté à la durée d'une fenêtre de transmission ainsi qu'au débit de la voie de transmission utilisée, des moyens pour appliquer une compression sans perte aux données sismiques enregistrées localement, des moyens pour calculer la différence entre les traces sismiques compressées sans perte enregistrées dans chaque unité locale (A) et les données sismiques correspondantes compressées transmises durant le premier temps, les moyens de transmission (3,4) étant adaptés à transmettre cette différence durant le deuxième temps; le système comportant, dans la station distante (CS), un ensemble de traitement (10) pour reconstituer les traces sismiques collectées par chaque unité locale de d'acquisition (A), par combinaison des données sismiques reçues successivement au cours des deux temps de transmission.

8. Système selon la revendication précédente, **caractérisé en ce que** l'ensemble de contrôle et de compression (2,7) dans chaque unité locale d'acquisition (A), est adapté à appliquer aux données sismiques une deuxième compression de type sans perte avec un deuxième taux de compression.

**9.** Système selon l'une deux revendications 7 ou 8, **caractérisé en ce que** chaque unité locale d'acquisition (A) comporte un ordinateur pourvu d'un processeur de signaux (7) et programmé pour effectuer la compression des traces sismiques.

**Claims**

**1.** Method for two-stage transfer of seismic traces between one or more local acquisition units (A) for seismic data and a remote station (CS) through at least one transmission channel, comprising recording of the seismic traces in each local acquisition unit, and, in a first stage, transmission of partial seismic data to allow control of the quality of operation of the local acquisition units, and, in a second stage, transmission of the recorded seismic traces to the remote station (CS), **characterised in that** the seismic data transmitted during the first stage are data compressed with losses, the seismic traces are recorded locally with compression without losses, the method comprising determination of the difference between the seismic traces compressed without losses recorded in each local unit (A) and the corresponding compressed seismic data transmitted during the first stage, transmission of this difference during the second stage and reconstitution in the remote station (CS) of the seismic traces collected by each local acquisition unit (A) by combining the seismic data received successively in the course of the two transmission stages.

**2.** Method according to claim 1, **characterised in that** the compressed seismic data transmitted during the first stage comprise at least one portion of a seismic trace acquired locally by each local acquisition unit (A).

**3.** Method according to one of claims 1 or 2, **characterised in that** the seismic data being collected by local acquisition units (A) in the course of data acquisition sessions each comprising a plurality of recording cycles for seismic traces corresponding to seismic signals returned by discontinuities in the substratum in response to seismic signals transmitted into the ground by a seismic source (S), the different cycles of a same session being separated from one another by predetermined intervals of time, the first compression of each seismic trace is effected with a first rate of compression sufficient so that the first transmission stage can be inserted during one of said intervals of time through an available transmission channel, the local recording of each seismic trace in a local acquisition unit (A) is effected after subjecting the seismic data to compression without losses with a second rate of compression, the deferred second transmission stage taking place during an interval of time between said sessions.

**4.** Method according to one of the preceding claims, **characterised in that** a second transmission channel is used for transfer of the seismic data transmitted during the second stage.

**5.** Method according to one of the preceding claims, **characterised in that** a wavelet transform technique is applied to the seismic data to obtain compressed seismic data.

**6.** Method according to one of claims 1 to 5, **characterised in that** a statistical prediction technique is applied to the data to obtain compressed seismic data.

**7.** System for two-stage transfer of seismic traces between one or more local acquisition units (A) for seismic traces and a remote station (CS) through at least one transmission channel, in which each local acquisition unit comprises means (CA, M) for acquisition and recording of seismic traces, means (3, 4) for two-stage transmission of the seismic data with, in a first stage, transmission of partial data to allow control of the quality of operation of the local acquisition units, and, in a second stage, transmission of the recorded seismic traces to the remote station (CS), and an assembly for control and compression of data (2, 7), **characterised in that** each assembly for control and compression (2, 7) comprises means for applying compression with losses to the seismic data to be transmitted during the first stage, the rate of compression being adapted to the duration of a transmission window and to the capacity of the transmission channel used, means for applying compression without losses to the seismic data recorded locally, means for calculating the difference between the seismic traces compressed without losses recorded in each local unit (A) and the corresponding compressed seismic data transmitted during the first stage, the means for transmission (3, 4) being adapted to transmit this difference during the second stage, the system comprising in the remote station (CS) an assembly for processing (10) to reconstitute the seismic traces collected by each local acquisition unit (A) by combining the seismic data received successively in the course of the two transmission stages.

**8.** System according to the preceding claim, **characterised in that** the assembly for control and compression (2, 7) in each local acquisition unit (A) is adapted to apply a second compression of the type without losses with a second rate of compression to the seismic data.

9. System according to one of claims 7 or 8, *characterised in that* each local acquisition unit (A) comprises a computer provided with a signal processor (7) and programmed to effect the compression of the seismic traces.

**Patentansprüche**

1. Verfahren zur Übertragung seismischer Spuren in zwei Zeiten zwischen einem oder mehreren lokalen Einheiten (A) zur Aufnahme seismischer Daten und einer entfernten Station (CS) durch wenigstens einen Übertragungsweg, das die Aufzeichnung der seismischen Spuren in jeder lokalen Aufzeichnungseinheit, eine Übertragung von partiellen seismischen Daten in einer ersten Zeit, um eine Regelung der Funktionsqualität der lokalen Aufnahmeeinheiten zu ermöglichen, und in einer zweiten Zeit eine Übertragung der aufgezeichneten seismischen Spuren zu der entfernten Station (CS) umfasst, **dadurch gekennzeichnet, dass** die bei der ersten Zeit übertragenen seismischen Daten mit Verlust komprimierte Daten sind, die seismischen Spuren lokal mit einer Komprimierung ohne Verlust aufgezeichnet werden, wobei das Verfahren die Bestimmung der Differenz zwischen den ohne Verlust komprimierten seismischen Spuren , die in jeder lokalen Einheit (A) aufgezeichnet werden, und den entsprechenden komprimierten bei der ersten Zeit übertragenen seismischen Daten, die Übertragung dieser Differenz bei der zweiten Zeit und die Wiederherstellung der durch jede lokale Aufnahmeeinheit (A) gesammelten seismischen Spuren bei der entfernten Station (CS) durch Kombination der seismischen Daten umfasst, die aufeinanderfolgend bei den beiden Übertragungszeiten empfangen werden.

2. Verfahren nach Anspruch 1, **dadurch gekennzeichnet, dass** die komprimierten, bei der ersten Zeit übertragenen seismischen Daten wenigstens einen Teil einer seismischen, lokal durch jede lokale Aufnahmeeinheit (A) aufgenommenen Spur umfassen.

3. Verfahren nach einem der Ansprüche 1 oder 2, **dadurch gekennzeichnet, dass** wenn die seismischen Daten durch die lokalen Aufnahmeeinheiten (A) bei Datenaufnahmephasen aufgenommen werden, die jede eine Vielzahl von Aufzeichnungszyklen seismischer Spuren umfassen, welche den durch die Diskontinuitäten des Erdreichs zurückgesandten seismischen Signale in Erwiderung der im Boden durch eine seismische Quelle (S) übertragenen Signale entsprechen, und die verschiedenen Zyklen einer gleichen Phase voneinander durch bestimmte Zeitintervalle getrennt sind, die erste Komprimierung jeder seismischen Spur mit einem ersten Kompressionsgrad durchgeführt wird, der ausreichend ist, damit die erste Übertragungszeit bei einem dieser Zeitintervalle durch einen verfügbaren Übertragungsweg zwischengeschaltet werden kann und die lokale Aufnahme jeder seismischen Spur in einer lokalen Aufnahmeeinheit (A) nach Anwendung einer Komprimierung ohne Verlust mit einem zweiten Kompressionsgrad auf die seismischen Daten durchgeführt wird, wobei die zweite verschobene Übertragungszeit bei einem Zeitintervall zwischen diesen Phasen stattfindet.

4. Verfahren nach einem der vorhergehenden Ansprüche, **dadurch gekennzeichnet, dass** ein zweiter Übertragungsweg für die Übertragung bei der zweiten Zeit übertragenen seismischen Daten verwendet wird.

5. Verfahren nach einem der vorhergehenden Ansprüche, **dadurch gekennzeichnet, dass** man auf die seismischen Daten eine Transformationstechnik mit Wellen anwendet, um die komprimierten seismischen Daten zu erhalten.

6. Verfahren nach einem der Ansprüche 1 bis 5, **dadurch gekennzeichnet, dass** man auf die Daten eine statistische Vorhersagetechnik anwendet, um die komprimierten seismischen Daten zu erhalten.

7. System zur Übertragung seismischer Spuren in zwei Zeiten zwischen einem oder mehreren lokalen Einheiten (A) zur Aufnahme seismischer Spuren und einer entfernten Station (CS) durch wenigstens einen Übertragungsweg, bei dem jede lokalen Aufnahmeeinheit Mittel (CA, M) zur Aufnahme und Aufzeichnung seismischer Spuren, Mittel (3,4 ) zur Übertragung der seismischen Daten in zwei Zeiten mit Übertragung von partiellen Daten in einer ersten Zeit, um eine Regelung der Funktionsqualität der lokalen Aufnahmeeinheiten und in einer zweiten Zeit eine Übertragung der aufgezeichneten seismischen Spuren zu der entfernten Station (CS) zu ermöglichen und eine Anordnung zur Regelung und Komprimierung von Daten (2,7) umfasst, **dadurch gekennzeichnet, dass** die Anordnung zur Regelung und Komprimierung (2,7) Mittel zum Anwenden einer Komprimierung mit Verlust auf die bei der ersten Zeit zu übertragenden seismischen Daten, wobei der Komprimierungsgrad der Dauer eines Übertragungszeitfensters sowie dem Durchsatz des verwendeten Übertragungswegs angepasst ist, Mittel zur Anwendung einer Komprimierung ohne Verlust auf die lokal aufgezeichneten seismischen Daten, Mittel zur Berechnung der Differenz zwischen den ohne Verlust komprimierten seismischen Spuren, die in jeder lokalen Einheit (A) aufgezeichnet werden, und den entsprechenden komprimierten seismischen Daten, die bei der ersten Zeit übertragen werden, umfasst, wobei die Übertragungsmittel (3, 4) zur Übertragung dieser Differenz bei der zweiten Zeit ausgelegt sind; das System bei der entfernten Station (CS) eine Bearbeitungsanordnung (10) zum Wiederherstellen der durch jede lokale Aufnahmeeinheit (A) gesammelten seismischen Spuren durch Kombination der seismischen Daten umfasst, die aufeinanderfolgend bei den beiden Übertragungszeiten empfangen werden.

8.  System nach dem vorhergehenden Anspruch, **dadurch gekennzeichnet, dass** die Anordnung zur Regelung und Komprimierung (2, 7 ) in jeder lokalen Aufnahmeeinheit (A) ausgelegt ist, um auf die seismischen Daten eine zweite Komprimierung des Typs ohne Verlust mit einem zweiten Kompressionsgrad anzuwenden.

9.  System nach einem der Ansprüche 7 oder 8, **dadurch gekennzeichnet, dass** jede lokale Aufnahmeeinheit (A) einen Computer umfasst, der mit einem Prozessor von Signalen (7) versehen ist und zur Durchführung der Komprimierung der seismischen Spuren programmiert ist.

FIG.1

FIG.2

**FIG.3**

**FIG.4**

fichier initial

calcul des résidus

calcul des coefficients

compression Huffman

fichier compressé
=
résidus compressés
+
coefficients a(j)

## FIG.5

fichier initial
=
résidus compressés
+
coefficients a(j)

décompression Huffman

résidus décompressés

(EQ 2)

fichier final
décompressé

## FIG.6

échelle : Haar  ondelette : Haar
échelle : D4  ondelette : D4
échelle : D10  ondelette : D10
échelle : D20  ondelette : D20

**FIG.7**

**FIG.8**

**FIG.9**

19

## FIG.10

## FIG.11

## FIG.12